# EUROPEAN PATENT SPECIFICATION

(11) **EP 1 543 057 B1**
(45) Date of publication and mention of the grant of the patent: **05.04.2017**
(21) Application number: 03810045.9
(22) Date of filing: 17.09.2003
(51) Int. Cl.: C08G 18/42, C08G 18/10

(54) **A PROCESS FOR IMPROVING THE HYDROLYSIS RESISTANCE OF A URETHANE ELASTOMER**
VERFAHREN ZUR VERBESSERUNG DER HYDROLYSEBESTÄNDIGKEIT EINES URETHANELASTOMERS
PROCEDE D'AMELIORATION DE LA RESISTANCE A L'HYDROLYSE D'UN ELASTOMERE URETHANE

(30) Priority: 19.09.2002 FR 0211582
(43) Date of publication of application: 22.06.2005
(73) Proprietor: BASF SE, 67056 Ludwigshafen am Rhein (DE)
(72) Inventor: GHESQUIERE, Denis, F-27370 Tourville la Campagne (FR)
(74) Representative: BASF IP Association
(86) International application number: PCT/US2003/029613
(87) International publication number: WO 2004/050735

(56) References cited:
- EP-A- 0 156 665
- WO-A1-00/50485
- US-A- 3 849 367
- US-A- 4 520 188
- US-A- 5 061 778
- US-A- 6 099 955
- CHEMICAL ABSTRACTS, vol. 110, no. 8, 20 February 1989 (1989-02-20), Columbus, Ohio, US; abstract no.: 59077y, page 69 XP000158113 & JP 63 182387 A (KURARAY) 27 July 1988 (1988-07-27)

## Description

### BACKGROUND OF THE INVENTION

### 1. Field of the Invention

This invention refers to a process for improving the hydrolysis resistance of elastomers based on urethane, a polyester polyol for implementing this process, the urethane elastomer obtained by this process, and its use.

### 2. Description of the Related Art

Urethane elastomers are known to be prepared by causing a prepolymer, which is the reaction product of a polyester polyol or polyether polyol resin and an organic diisocyanate, to react with a hydroxylated compound consisting of at least one polyester polyol or polyether polyol in the presence of a catalyst and possibly a foaming agent and a surfactant.

In order to prepare the polyester polyol both on the prepolymer side as well as the hydroxylated compound side, carboxylic diacids such as adipic acid are commonly used.

The urethane elastomers produced in this way, based essentially on polyesters, possess good physical properties. However, for certain applications they are excessively sensitive to water. This is true when these elastomers are intended to form certain soles of shoes; it is also true when they are used to produce mechanical parts requiring a good resistance to hydrolysis. Urethane elastomers based on polyethers are not sensitive to hydrolysis but generally possess poorer physical properties.

In order to improve the hydrolysis resistance of polyester-based urethane elastomers, anti-hydrolysis additives of the polycarbodiimide type, such as that sold by Bayer under the trade name Stabaxol, are known to be added. Still, such additives are relatively costly and do not systematically achieve an improvement in the resistance to hydrolysis. Indeed, in two out of three cases, the addition of such additives was found not to provide the expected improvement.

According to another approach, patent EP 0,156,665 proposes the use of dimerized fatty acids to prepare the polyester polyols used in the formulation of either the hydroxylated compound or the prepolymer. This solution provides improved results, but they are still insufficient, and furthermore the final properties are affected. The use of branched polyols has also been proposed for the preparation of polyester polyols. In this case the use of such polyols considerably increases the cost of the urethane elastomers and worsens their properties.

Document WO 00/50485 discloses a process for improving the hydrolysis resistance of polyurethane elastomers. WO 00/50485 discloses the use of a polyester polyol prepared from o-phthalic acid and an aliphatic alcohol.

### SUMMARY OF THE INVENTION

The purpose of this invention is to propose a process to improve the resistance to hydrolysis of a urethane elastomer that is effective, inexpensive, and compatible with the machines customarily used, while still ensuring that said elastomer will have good mechanical properties.

To this end, this invention proposes a process for improving the hydrolysis resistance of a urethane elastomer, with said elastomer being prepared by the reaction of a hydroxylated compound with a prepolymer in the presence of a catalyst, and optionally a foaming agent and a surfactant, with said hydroxylated compound consisting of at least one polyester polyol resin, with said prepolymer being prepared by the reaction of at least a second polyester polyol resin and/or at least one polyether polyol resin and at least one polyisocyanate, with the polyisocyanate being in molar excess with respect to the second polyester polyol resin and/or polyether polyol resin, and with both the first and second polyester polyol resins being prepared by the reaction of at least one polyacid with at least one polyol, wherein at least the first polyester polyol resin is prepared by the reaction of at least one aliphatic dicarboxylic acid comprising between 8 and 12 carbon atoms and ortho-phthalic acid or its corresponding anhydride, with at least one polyol.

### BRIEF DESCRIPTION OF THE DRAWINGS

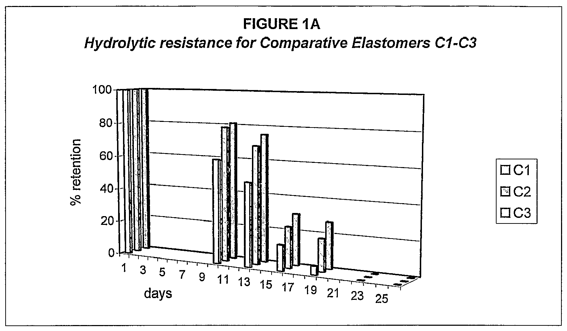

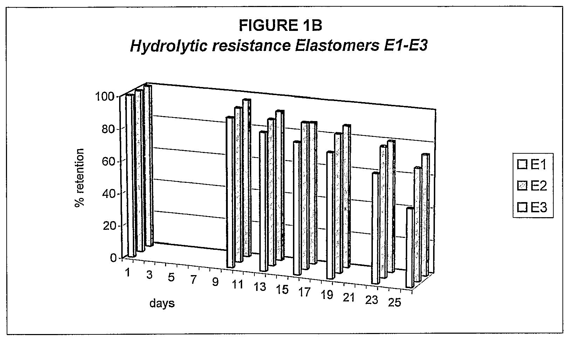

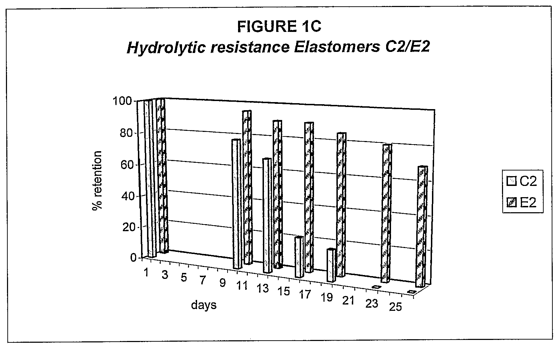

Figs. 1-4 show in graphic form the hydrolytic resistance results of the elastomers of the invention and various comparative elastomers.

### DESCRIPTION OF THE PREFERRED EMBODIMENTS

The filing company has discovered, quite surprisingly, that by using a particular polyester polyol obtained by selecting specific acids, the hydrolysis resistance of the resulting urethane elastomers is considerably improved. According to the invention, the polyester polyol is prepared by the reaction of ortho-phthalic acid or its corresponding anhydride and at least one aliphatic dicarboxylic acid comprising between 8 and 12 carbon atoms, with at least one polyol. The process of the invention makes it possible to produce elastomers having an improved hydrolysis resistance under the usual implementation conditions, while still having good mechanical properties. In particular, the resulting elastomers quite surprisingly possess very good impact absorption properties.

Although the polyester polyol can also be used to prepare the prepolymer, use of the polyester polyol according to the invention solely for the preparation of the hydroxylated compound makes it possible to achieve excellent hydrolysis resistance results.

According to one feature, in order to prepare at least the first polyester polyol resin, the molar ratio of the ortho-phthalic acid or anhydride to the aliphatic dicarboxylic acid is between 30:70 and 60:40.

Advantageously, the aliphatic dicarboxylic acid used to prepare at least the first polyester resin is sebacic acid (C10).

Advantageously, the polyol used to prepare at least the first polyester polyol resin is chosen from among the group consisting of monoethylene glycol (MEG), diethylene glycol (DEG), butanediol (BD), and their mixtures. The polyol used is preferably diethylene glycol (DEG).

When the polyester polyol of the invention is used solely to prepare the hydroxylated compound, said prepolymer is prepared by the reaction of at least one polyisocyanate and at least one polyether polyol resin and/or a second polyester polyol resin preferably formed from a polyacid chosen from among the group consisting of succinic acid (C4), glutaric acid (C5), adipic acid (C6) and their mixtures, and a polyol chosen from among the group consisting of monoethylene glycol (MEG), diethylene glycol (DEG), butanediol (BD) and their mixtures, with said polyol possibly being used in a mixture with a small proportion of another polyol chosen from among the group consisting of trimethylolpropane, glycerol, or pentaerythritol.

Another purpose of this invention is to propose a polyester polyol for the implementation of the process defined previously. The polyester of this invention is characterized by the fact that it is made by the reaction of at least one aliphatic dicarboxylic acid with C8-C12, preferably sebacic acid, and ortho-phthalic acid or its corresponding anhydride, with at least one polyol.

According to one feature, the molar ratio of the ortho-phthalic acid or anhydride to the aliphatic dicarboxylic acid is between 30:70 and 60:40.

The polyol employed may be chosen from among the group consisting of monoethylene glycol (MEG), diethylene glycol (DEG), butanediol (BD) and their mixtures. The polyol used is preferably diethylene glycol.

The purpose of this invention is also urethane elastomers obtained by the process of the invention and the use of these elastomers in order to make shoe soles.

The process of the invention for making hydrolysis-resistant urethane elastomers can be described in greater detail as follows.

The polyester polyol resins of the invention are obtained by known means by causing at least one aliphatic dicarboxylic diacid with C8-C12 and ortho-phthalic acid or its corresponding phthalic acid anhydride to react with at least one polyol using a conventional esterification catalyst. A reaction vessel is loaded with the mixture of the aliphatic dicarboxylic diacid(s) of ortho-phthalic acid or the corresponding anhydride and the polyol(s) used. The phthalic/aliphatic molar ratio is between 20:80 and 70:30, and is preferably between 30:70 and 60:40. We heat and agitate in the atmosphere of an inert gas which may be nitrogen. A catalyst is optionally introduced. The water formed in the course of the reaction distills around 150°C for 1 to 4 hours and the temperature gradually rises. The temperature is kept at a value of between 160 and 250°C until obtaining an acid number (AN) of less than 2, preferably less than 0.5 mg KOH/g, and a hydroxyl number (OHN, number of OH groups) of between 25 and 230 mg KOH/g. The total reaction time is 15 to 30 hours.

Among the aliphatic carboxylic diacids having C8 to C12 that can be used, that is, suberic acid (C8), azelaic acid (C9), sebacic acid (C10), undecanedioic acid (C11), and dodecanedioic (C12), sebacic acid is preferred.

The esterification catalysts that can be used may be chosen from among the organic titanates, the alkylaryl and alkylsulfonic acids, the phosphoric acids, or the tin salts. The catalysts may advantageously be present in the reaction mixture in a concentration of between 0.004% and 0.020% by weight in relation to the weight of the reaction mixture.

This polyester polyol of the invention is part of the composition of the hydroxylated compound and may possibly be used to prepare the prepolymer.

In order to prepare the prepolymer, at least one polyester polyol resin and/or polyether polyol resin and at least one isocyanate having a functionality of at least 2, known for the preparation of polyurethanes, whether they are aliphatic, cycloaliphatic, arylic, arylaliphatic, or heterocyclic, are caused to react together. Generally preferred are the polyisocyanates that are easily available on the market, such as 2,4- and 2,6-toluylene diisocyanate (TDI) and their mixtures, or pure 4,4'-methylene-diphenyldiisocyanate (MDI) and its derivatives and their mixtures, in a polycarbodiimide-modified grade such as, for example, the product marketed by Bayer under the trade name "Desmodur CD" or the product marketed by Dow under the trade name "Isonate 143L." The isocyanate portion is in molar excess with respect to the polyester resin so as to obtain a prepolymer with isocyanate ends that can react with the hydroxylated compounds to obtain a urethane elastomer.

The prepolymer may be prepared from a polyester polyol consisting of the polyester polyol of the invention or a previously known polyester polyol, and/or from any previously known polyether polyol. Consequently, any prepolymer available on the market may be used for the implementation of the invention. As an example, existing polyester polyols that are used are prepared by condensation of at least one aliphatic dicarboxylic acid with at least one polyol. Among the polyols that can be used advantageously, let us mention as an example, monoethylene glycol, diethylene glycol, propylene glycol, dipropylene glycol, 1,4-butanediol, 1,6-hexanediol, neopentyl glycol, glycerol and trimethylolpropane, and pentaerythritol. The polyol used is preferably chosen from among the group defined previously for preparation of the polyester polyol of the invention, consisting of monoethylene glycol, diethylene glycol, butanediol, and their mixtures. Among the dicarboxylic acids that can advantageously be used, let us mention, as examples, succinic acid (C4), glutaric acid (C5), adipic acid (C6), and their mixtures. The aliphatic dicarboxylic acid used is preferably adipic acid.

In order to prepare the prepolymers by known means, the diisocyanate(s) employed are heated in a reaction vessel to a temperature of between 40 and 80°C, then the polyester polyol resin(s) is (are) added with agitation. The temperature rises to between 80 and 110°C and this temperature is maintained for 1 to 6 hours. The content of NCO groups is checked and adjusted to a value of between 2 and 25% by weight.

As an example, the existing polyether polyols that can be used in this invention to prepare the prepolymer include those described in patent EP 0,582,3 85 obtained by polymerization of ethylene oxide with another cyclic oxide such as propylene oxide, butylene oxide, or tetrahydrofuran in the presence of a polyfunctional initiator such as water or polyols, for example monoethylene glycol, diethylene glycol, propylene glycol, dipropylene glycol, cyclohexane dimethanol, resorcinol, bisphenol A, glycerol, trimethylolpropane, 1,2,6-hexanetriol, or pentaerythritol. The prepolymer is prepared by known means through a reaction of the polyisocyanates with the polyether polyol resin or resins at a temperature of between 50 and 90°C for a reaction time of between 0.5 and 4 hours.

The urethane elastomer, also referred to herein as polyurethane foam in the case of expanded urethane elastomer, obtained in the presence of a foaming agent, can then be prepared by any conventional process known to specialists in the field, through a reaction of the prepolymer and the hydroxylated compound in the presence of a catalyst and possibly in the presence of a foaming agent, a cross-linking agent, or a chain-lengthening agent, and/or other known additives. The elastomer is advantageously prepared by causing two components--one component consisting of the prepolymer and a second so-called hydroxylated component formed of a mixture of the hydroxylated compound consisting of at least one polyester polyol of the invention prepared as indicated above--with the catalyst and optionally the foaming agent and the additives. The preparation of polyurethane foams is described in greater detail, specifically in the Polyurethane Handbook, G. Oertel, Hanser Publishers, 2nd Edition, 1993.

The catalysts are advantageously amine-type catalysts such as 1,4-diaza-[2,2,2]-bicyclo octane (also called triethylenediamine) as is or locked in the carboxylic acids, and possibly organic salts of tin or bismuth.

For the foaming agent, one can use water possibly mixed with a surfactant and/or organic compounds having a low melting point.

The optional cross-linking and chain-lengthening agents are compounds having at least two hydrogen atoms likely to react with the isocyanates and having a molecular weight of less than 500. These compounds are, for example, compounds having hydroxyl and/or amino and/or carboxyl groups such as monoethylene glycol, 1,4-butanediol, trimethylolpropane or glycerol, methylenebis-(2-chloroaniline), methylenebis-(dipropylaniline), diethyl-toluenediamine, trimethylene glycol di-p-aminobenzoate, isophorone diamine, triethanolamine, and triisopropanolamine, which may possibly be alkoxylated.

The surfactants used are advantageously of the wax and mineral oil type, which are mixtures of hydrocarbons having a naphthenic or paraffinic structure, or of the silicone oil type optionally modified by alkoxylation.

Other additives may also be introduced by known means, such as emulsifying agents, foam stabilization agents, fire-retardants, pigments, dyes, fillers, resistivity reduction agents (anti-static agents), anti-aging stabilizers, or substances having an antifungal or anti-bacterial action.

The prepolymer and hydroxylated compound are each loaded into a tank of the machine and each is raised to a temperature of between 20 and 60°C. The flows of both the prepolymer and the hydroxylated compound that must enter into the reaction are adjusted so as to obtain in the machine's mixing head the desired NCO:OH molar ratio close to the stoichiometry between the NCO groups of the prepolymer and the reactive groups of the hydroxylated compound with respect to the NCOs. For reasons of implementation owing to the machines, the NCO:OH ratio by weight is generally between 0.5 and 1.5, preferably between 0.6 and 1.2. The mixture is introduced into a mold raised to a temperature of between 20 and 60°C. It is either injected into the closed mold or poured into the open mold, in which case the mold is immediately closed.

The polyurethane foams of this invention can be used to manufacture soles consisting of a single layer, referred to as monodensity, or so-called "combined" soles consisting of two layers: a relatively compact wear layer having a density of about 0.9 to 1.25, and a comfort layer having a lower density of about 0.3 to 0.5. The layer of monodensity soles and the comfort layer of combined soles are made of expanded urethane elastomer, whereas the wear layer may be made of expanded or non-expanded urethane elastomer.

### EXAMPLES

The examples given below, solely as non-limiting illustrations, will provide a better understanding of the invention. In the examples the polyester polyol of this invention is used solely on the hydroxylated compound side, with the polyurethane foams being made from known prepolymer compositions. Unless indicated otherwise, the ratios specified in the examples below are expressed in moles.

### A. Preparation of Polyester Polyol Resins

### 1. Polyester polyol resin A1:

Resin A1, having an average molecular weight of 2000 by weight, was obtained from the following ingredients:
- 50:50 molar mixture of phthalic anhydride/sebacic acid
- diethylene glycol (DEG)
- catalyst: FOMREZ SUL11A

In an esterification reactor equipped with a fractionating column are introduced the sebacic acid, phthalic anhydride, and DEG. We heat with agitation up to 220-230°C in a nitrogen atmosphere in the presence of a catalyst consisting of 84 ppm of FOMREZ SUL11A marketed by the Crompton company (this catalyst is a tin derivative). The reaction is continued for 24 hours. The properties of the resulting A1 resin, that is, the appearance at 25°C, the hydroxyl number (OHN) in mg of KOH per gram, the acid number (AN) in mg of KOH per gram, the percentage of water by weight, the Hazen color, and the viscosity at 25°C, are indicated in Table I below:

**TABLE I**

| Properties | Resin A1 |
|---|---|
| Appearance at 25°C | Clear liquid |
| OHN (mg KOH/g) | 56.1 |
| AN (mg KOH/g) | 0.2 |
| Water (%) | 0.01 |
| Color (Hazen) | 150 |
| Viscosity at 25°C (mPa/s) | 25,800 |

### 2. Polyester polyol resins A2-A4

Resins A2 to A4 were prepared in the same way as resin A1 using the same catalyst and the ingredients indicated in Table II below:

**TABLE II**

| | Resin A2 | Resin A3 | Resin A4 |
|---|---|---|---|
| Acid | PA:SA | PA:SA | PA:DA |
| | 30:70 | 60:40 | 60:40 |
| Polyol | DEG | DEG | DEG |
| | 100 | 100 | 100 |

| | | | |
|---|---|---|---|
| PA: phthalic anhydride; SA: sebacic acid (C10); DA: dodecanedioic acid (C12); DEG: diethylene glycol | | | |

The hydroxyl number (OHN), acid number (AN), and viscosity at 25°C of resins A2-A4 are indicated in Table III below:

**TABLE III**

| Properties | Resin A2 | Resin A3 | Resin A4 |
|---|---|---|---|
| OHN (mg KOH/g) | 56.2 | 55.8 | 54.2 |
| AN (mg KOH/g) | 0.2 | 0.2 | 0.4 |
| Viscosity at 25°C (mPa/s) | 10,600 | 47,400 | 42,300 |

### 3. Comparative polyester polyol resins (not part of the invention)

Comparative resins B1 through B4 were made according to the process described previously for resin A1 using the same catalyst and the ingredients indicated in Table IV below:

**TABLE IV**

| | Resin B1 | Resin B2 | Resin B3 | Resin B4 | Resin B5 |
|---|---|---|---|---|---|
| Acid | AA 100 | AA 100 | AA/SA 50:50 | SA 100 | AA 100 |
| Polyol | MEG:BD 70:30 | MEG:DEG:TM P 59:39:2 | MEG:BD 70:30 | DEG 100 | MEG:DEG:TM P 59:39:2 |

| | | | | | |
|---|---|---|---|---|---|
| AA: adipic acid; PA: phthalic anhydride; SA: sebacic acid; MEG: monoethylene glycol; DEG: diethylene glycol; BD: 1,4-butanediol; TMP: trimethylol propane | | | | | |

The hydroxyl number (OHN), acid number (AN), and viscosity at 25, 50 or 60°C of resins B1-B5 are indicated in Table V below:

**TABLE V**

| Properties | Resin B1 | Resin B2 | Resin B3 | Resin B4 | Resin B5 |
|---|---|---|---|---|---|
| OHN (mg KOH/g) | 56.8 | 55.9 | 54.1 | 54.8 | 38.5 |
| AN (mg KOH/g) | 0.4 | 0.5 | 0.2 | 0.2 | 0.6 |
| Viscosity (mPa/s) at °C | 2000/50 | 11,500/25 | 1000/60 | 780/60 | 29,500/25 |

| | | | | | |
|---|---|---|---|---|---|
| B. Prepolymers: | | | | | |

Two types of prepolymers (P1 and P2) of known compositions were used. These two prepolymers were prepared from the ingredients indicated in Table VI below:

**TABLE VI**

| | Prepolymer P1 | Prepolymer P2 |
|---|---|---|
| NCO% | 16.5 | 19 |
| Isocyanate(s) | pure 4,4'-MDI 100 | pure 4,4'-MDI:modified MDI* 80:20 by weight |
| Polyester | Resin B2 | Resin B5 |

| | | |
|---|---|---|
| * Modified MDI: Desmodur CD by Bayer | | |

### C. Preparation of Polyurethane Foams

For the production of polyurethane foams, we cause a prepolymer as defined in section B and a hydroxylated component consisting of a polyester polyol resin as defined in section A, to react in a mixture of water, catalyst, and chain-lengthening agent, and possibly an antistatic agent (the product marketed by the Great Lakes company under the name "Catafor F"), and/or a surfactant (the product marketed by the "Crompton Corporation" under the name "NIAX Silicone SR 393") at a temperature of between 20 and 60°C. The quantities of prepolymer and hydroxylated component that must react with each other are adjusted starting with the NCO:OH stoichiometric ratio. The NCO:OH ratios actually used are given, by weight, in the result tables below.

In order to illustrate the improvement in hydrolysis resistance achieved by the process of this invention, in examples 1-5 we have compared elastomers of the invention, made using resin A1, with known elastomers made using one of comparative resins B1 through B5. Example 6 concerns elastomers of the invention manufactured using resins A2-A4 of the invention.

For each batch of urethane elastomer obtained, we conduct (in accordance with ISO standard 5423: 1992, Appendix E) a hydrolysis test on several test pieces from the batch, a test in which each test piece is placed inside an enclosure for several days at 70°C and 100% relative humidity (saturating water vapors). For each batch, we measure the breaking load (according to DIN standard 53504) on the test pieces taken before hydrolysis and on several test pieces later taken after the hydrolysis tests conducted as indicated above on various days, and then we calculate the average breaking load and the corresponding retention percentages. We also measure the following mechanical properties for each batch:
- Shore A hardness according to DIN standard 53505;
- elongation according to DIN standard 53504;
- resistance to tearing according to DIN standard 53515;
- resistance to flexing according to the Ross Flex method with starter cut EXAMPLE 1:

This example involves injection molding of monodensity sole layers on a Desma machine performed with elastomers E1, E2, and E3 of the invention, prepared using resin A1 in the hydroxylated component, whose formulation is indicated below, and prepolymer P1 in ratios by weight of NCO:OH of 98:100, 100:100, and 102:100, respectively, and comparative elastomers C1, C2, and C3 prepared from the same prepolymer P1 and resin B1 in place of resin A1, in the same formulation of hydroxylated component and in the same identical ratios. The reaction parameters and results of the physical and chemical property tests are given in Table VII below.

Formulation of the hydroxylated component (% by weight):

**TABLE VII**

| | C1-C3 | E1-E3 |
|---|---|---|
| Resin B1 | 90.25% | 90.25% |
| Resin A1 | 7.87% | 7.87% |
| MEG | 0.5% | 0.5% |
| Trimethylol propane | 0.6% | 0.6% |
| Triethylene diamine | 0.4% | 0.4% |
| Niax Silicone SR 393 Water | 0.38% | 0.38% |

**TABLE VII**

| | Comparative elastomers C1-3 | | | Elastomers E1-3 | | |
|---|---|---|---|---|---|---|
| | C1 | C2 | C3 | E1 | E2 | E3 |
| Prepolymer | P1 | | | | | |
| Polyester polyol resin | B | | | A1 | | |

| Reaction Parameters | | | | | | |
|---|---|---|---|---|---|---|
| NCO:OH ratio | 98:100 | 100:100 | 102:100 | 98:100 | 100:100 | 102:100 |
| Creme time (s) | 5-6 | | | 5-6 | | |
| Tack free time (s) | 21-23 | | | 18-20 | | |
| Setting time (s) | 34-36 | | | 32-34 | | |
| Free density | 0.34 | | | 0.33 | | |
| Lifting time in min | 2 | | | 2 | | |
| Molding temperature in °C | 55 | | | 55 | | |

| Physical and Mechanical Properties* | | | | | | |
|---|---|---|---|---|---|---|
| Molding density | 0.6 | | | 0.6 | | |
| Shore A hardness | 49 | 50 | 51 | 43 | 42 | 44 |
| Elongation % | 520 | 475 | 505 | 540 | 535 | 495 |
| Breaking load | | | | | | |
| before hydrolysis MPa | 7.4 | 7.0 | 6.7 | 6.0 | 6.1 | 6.1 |
| Hydrolysis at 9 days MPa (% ret.) | 4.5 (61) | 5.5 (79) | 54. (81) | 5.5 (92) | 5.7 (95) | 5.8 (97) |
| Hydrolysis at 12 days MPa (% ret.) | 3.6 (49) | 4.8 (69) | 5.0 (75) | 5.1 (85) | 5.4 (90) | 5.5 (92) |
| Hydrolysis at 15 days MPa (% ret.) | 1.0 (15) | 1.7 (24) | 2.0 (30) | 4.9 (81) | 5.4 (90) | 5.2 (87) |
| Hydrolysis at 18 days MPa (% ret.) | 0.4 (5) | 1.3 (19) | 1.8 (27) | 4.6 (77) | 5.1 (85) | 5.2 (87) |
| Hydrolysis at 22 days MPa (% ret.) | 0 | 0 | 0 | 4.0 (67) | 4.8 (80) | 4.8 (80) |
| Hydrolysis at 25 days MPa (% ret.) | 0 | 0 | 0 | 2.9 (48) | 4.15 (69) | 4.4 (73) |
| Tearing N/mm | 30 | 28 | 27 | 26 | 24 | 23 |
| Ross Flex at 20°C, kilocycles for 500% propagation of the starter cut | >200 | 180 | 170 | >200 | >200 | 120 |

| | | | | | | |
|---|---|---|---|---|---|---|
| * performed on sheets 6 mm thick | | | | | | |

Elastomers E1-E3 of the invention are made under implementation conditions identical to those of elastomers C1-C3.

In this example the breaking load was measured after 9, 12, 15, 18, 22, and 25 days under hydrolysis conditions. Figure 1A and 1B show, in the form of graphs, the hydrolysis resistance results of comparative elastomers C1-C3 and elastomers E1-E3 of the invention, respectively, which are indicated in Table VII. For a better graphical comparison, the hydrolysis resistance results of elastomer E2 and comparative elastomer C2 are shown graphically in Figure 1C. Elastomers E2 and C2 correspond to the elastomers yielding the best results in the hot indentation test as performed on the foam during industrial molding.

These results clearly show that the elastomers of the invention have considerably greater hydrolysis resistance than that of the comparative elastomers, and this in spite of a slightly lower Shore A hardness in this particular case.

### EXAMPLE 2

This example involves the molding of wear layers for combined soles made with elastomer E4 of the invention prepared using resin A1 in the hydroxylated component, and comparative elastomer C4 made with resin B2, with both elastomers, E4 and C4, being prepared with the same prepolymer P1. In this example the formation of the hydroxylated compound based on resin A1 was enriched with MEG so as to obtain elastomers providing comparable Shore A hardness values. The reaction parameters and results are given in Table VIII below. Formulation of the hydroxylated component for C4 and E4 (% by weight):

| | C4 | E4 |
|---|---|---|
| Resin A1 | - | 93.5% |
| Resin B2 | 94.5% | - |
| MEG | 4.6% | 5.6% |
| Triethylene diamine | 0.8% | 0.8% |
| Water | 0.1% | 0.1% |

**TABLE VIII**

| | Comparative elastomer C4 | Elastomer E4 |
|---|---|---|
| Prepolymer | P1 | |
| Polyester polyol resin | B2 | A1 |

| Reaction Parameters | | |
|---|---|---|
| NCO:OH ratio | 63:100 | 73:100 |
| Creme time (s) | - | - |
| Tack free time (s) | 16-18 | 19-21 |
| Setting time (s) | 26-28 | 36-38 |
| Lifting time in min | 2 | 2 |
| Molding temperature in °C | 45 | 45 |

| Physical and Mechanical Properties* | | |
|---|---|---|
| Molding density | 1.05 | 1 |
| Shore A hardness | 60-61 | 63-64 |
| Elongation % | 565 | 575 |
| Breaking load | | |
| before hydrolysis MPa | 12.1 | 13.7 |
| Hydrolysis at 5 days MPa (% ret.) | 69 | 79 |
| Hydrolysis at 7 days MPa (% ret.) | 43 | 72 |
| Hydrolysis at 9 days MPa (% ret.) | 32 | 70 |
| Hydrolysis at 14 days MPa (% ret.) | 0 | 47 |
| Hydrolysis at 21 days MPa (% ret.) | 0 | 32 |
| Tearing N/mm | 53 | 44 |
| Ross Flex at 20°C, kilocycles for 500% propagation of the starter cut | 65 | 70 |

| | | |
|---|---|---|
| * performed on sheets 6 mm thick | | |

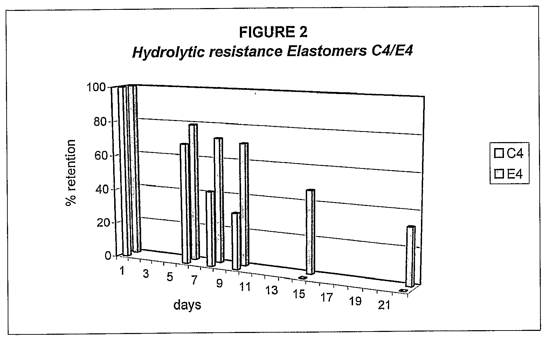

The hydrolysis resistance results of comparative elastomer C4 and elastomer E4 of the invention indicated in Table VIII are shown graphically in Figure 2. Elastomer E4 has a markedly greater hydrolysis resistance than that of elastomer C4 while being easy to implement and retaining comparable or better physical properties.

### EXAMPLE 3:

This example involves the molding of layers for monodensity soles made from elastomer E5 of the invention, prepared using resin A1 in the hydroxylated component and prepolymer P2, and comparative elastomer C5 made with resin B 1 and prepolymer P1. In this example the formulations were adjusted with MEG so as to obtain elastomers having comparable Shore A hardness values. The reaction parameters and results are given in Table IX below.
Formulation of the hydroxylated component for C5 and E5 (% by weight):

| | C5 | E5 |
|---|---|---|
| Resin A1 | - | 89.1% |
| Resin B1 | 90.6% | - |
| MEG | 7.5% | 9% |
| Triethylene diamine | 0.6% | 0.6% |
| Trimethylol propane | 0.5% | 0.5% |
| Niax Silicone SR 393 | 0.4% | 0.4% |
| Water | 0.4% | 0.4% |

**TABLE IX**

| | Comparative elastomer C5 | Elastomer E5 |
|---|---|---|
| Prepolymer | P1 | P2 |
| Polyester polyol resin | B1 | A1 |

| Reaction Parameters | | |
|---|---|---|
| NCO:OH ratio | 99:100 | 95:100 |
| Creme time (s) | 5-6 | 4-5 |
| Tack free time (s) | 23-25 | 16-18 |
| Setting time (s) | 43-45 | 32-34 |
| Free density | 0.32 | 0.30 |
| Lifting time in min | 2.25 | 2 |
| Molding temperature in °C | 45 | 45 |

| Physical and Mechanical Properties* | | |
|---|---|---|
| Molding density | 0.6 | 0.6 |
| Shore A hardness | 52 | 54 |
| Elongation % | 380 | 310 |
| Breaking load | | |
| before hydrolysis MPa | 8.5 | 7.9 |
| Hydrolysis at 10 days MPa (% ret.) | 6.5 (76) | 5.9 (75) |
| Hydrolysis at 15 days MPa (% ret.) | 3.4 (40) | 4.9 (62) |
| Hydrolysis at 20 days MPa (% ret.) | 1.4 (16) | 4.1 (52) |
| Hydrolysis at 25 days MPa (% ret.) | 0 | 2.3 (32) |
| Hydrolysis at 30 days MPa (% ret.) | 0 | 1.1 (14) |
| Tearing N/mm | 33 | 30 |
| Ross Flex at 20°C, kilocycles for 100% propagation of the starter cut | >150 | >150 |

| | | |
|---|---|---|
| * performed on sheets 6 mm thick | | |

Elastomer E5 of the invention has a flexing resistance value at least equal to that of comparative elastomer C5.

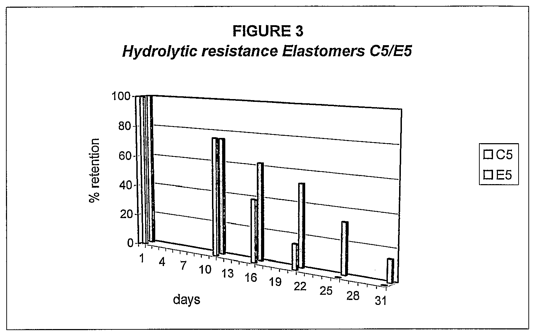

The hydrolysis resistance results of the comparative elastomer and the elastomer of the invention indicated in Table IX are shown graphically in Figure 3. These results show that elastomer E5 of the invention also has excellent hydrolysis resistance properties compared to elastomer C5.

### EXAMPLE 4

This example involves the molding of comfort layers for combined soles made from elastomers E6-E9 of the invention, prepared using resin A1 in the hydroxylated component and prepolymer P1, and comparative elastomers C6-9 made with resin B1 and prepolymer P1. In this example the formulations were adjusted with MEG so as to obtain elastomers having comparable Shore A hardness values. The reaction parameters and results are given in Table X below.
Formulation of the hydroxylated component for C5 and E5 (% by weight):

| | C6-9 | E6-9 |
|---|---|---|
| Resin A1 | - | 85.47% |
| Resin B1 | 86.77% | - |
| MEG | 7.2% | 8.5% |
| Catafor F | 4.0% | 4.0% |
| Triethylene diamine (TEDA) | 0.6% | 0.6% |
| Trimethylol propane | 0.5% | 0.5% |
| Niax Silicone SR 393 | 0.4% | 0.4% |
| Water | 0.53% | 0.53% |

**TABLE X**

| | Comparative elastomers C6-9 | | | | Elastomers E6-9 | | | |
|---|---|---|---|---|---|---|---|---|
| | C6 | C7 | C8 | C9 | E6 | E7 | E8 | E9 |
| Prepolymer | P1 | | | | P1 | | | |
| Polyester polyol resin | B1 | | | | A1 | | | |

| Reaction Parameters | | | | | | | | |
|---|---|---|---|---|---|---|---|---|
| NCO:OH ratio | 99: 100 | 101:1 00 | 103: 100 | 105:1 00 | 110 :10 0 | 112: 100 | 114:1 00 | 116:100 |
| Creme time (s) | 4-5 | | | | 5-6 | | | |
| Tack free time (s) | 23-26 | | | | 17-21 | | | |
| Setting time (s) | 40-44 | | | | 35-40 | | | |
| Free density | 0.24 | | | | 0.24 | | | |
| Lifting time in min | 2 | | | | 2 | | | |
| Molding temperature in °C | 45 | | | | 45 | | | |

| Physical and Mechanical Properties* | | | | | | | | |
|---|---|---|---|---|---|---|---|---|
| Molding density | 0.5 | | | | 0.5 | | | |
| Shore A hardness | 39 | 39 | ?9 | 39 | 40 | 40 | 40 | 40 |
| Elongation % | 490 | 470 | 440 | 425 | 435 | 415 | 380 | 375 |
| Breaking load | | | | | | | | |
| before hydrolysis MPa | 5.2 | 5.4 | 5.5 | 5.6 | 5.0 | 5.3 | 5.6 | 5.6 |
| Hydrolysis at 10 days MPa (% ret.) | 3.4 (65) | 4.3 (80) | 5(91) | 5.2 (93) | 4 (80) | 4.6 (87) | 5.4 (100) | 5.9 (100 |
| Hydrolysis at 15 days MPa (% ret.) | 1.8 (35) | 2(37) | 2(36) | 2.4 (43) | 4 (80) | 4.5 (85) | 5(94) | 5.2 (93) |
| Hydrolysis at 20 days MPa (% ret.) | 0.8 (15) | 0.9 (17) | 1.1 (20) | 1.1 (20) | 2.8 (56) | 3.1 (58) | 4.2 (79) | 4.6 (82) |
| Hydrolysis at 25 days MPa (% ret.) | 0 | 0 | 0 | 0 | 1.3 (26) | 1.5 (28) | 2(38) | 2.4 (43) |
| Hydrolysis at 30 days MPa (% ret.) | 0 | 0 | 0 | 0 | 1.1 (22) | 1.4 (26) | 2(38) | 1.5 (27) |
| Tearing N/mm | 23 | 21 | 21 | 21 | 23 | 22 | 22 | 21 |

| | | | | | | | | |
|---|---|---|---|---|---|---|---|---|
| * performed on sheets 6 mm thick | | | | | | | | |

Elastomers E6-E9 of the invention demonstrated a very good ability to be implemented under customary conditions and showed physical properties at least equal to those of comparative elastomers C6-C9.

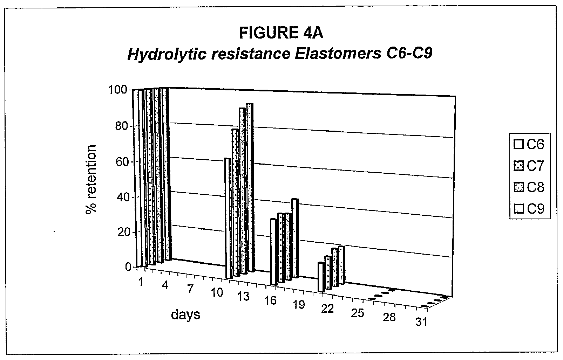

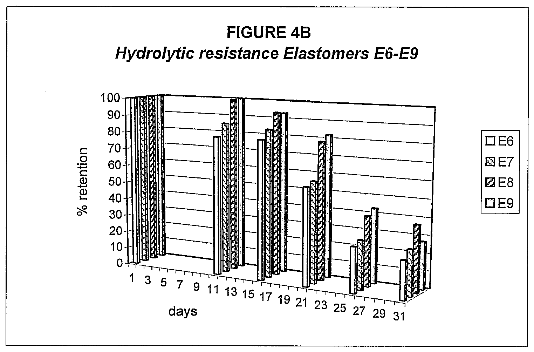

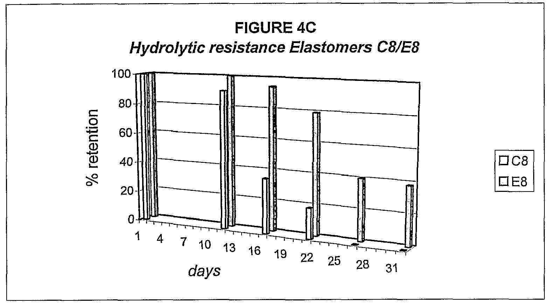

Figures 4A and 4B show in graphic form the hydrolysis resistance results of the comparative elastomers and the elastomers of the invention, respectively, indicated in Table X. For a better graphical representation, the hydrolysis resistance results of elastomer E8 and comparative elastomer C8 are shown simultaneously in Figure 4C. Elastomers E8 and C8 correspond to the elastomers having the best results in the indentation test. These results show that elastomers E6-9 of the invention also possess excellent properties of hydrolysis resistance.

In addition, elastomer E8 of the invention and comparative elastomer C8 were subjected to an impact absorption test. The test consisted of a falling weight test in which an 8.5 kg striker is dropped onto the sample from a height of 50 mm. These conditions are designed to simulate the impact at a man's heel while running. The striker is circular with a semi-convex side having a curvature radius of 37.5 mm. An accelerometer and a displacement sensor attached to the striker make it possible to measure the maximum deceleration (m/s2) of the striker upon impact with the sample, the returned energy in % (the quantity of energy returned after the impact determined from the rebound height of the striker), and the maximum penetration in mm (the maximum ram compression of the sample upon impact). The results are given in Table XI below:

**TABLE XI**

| | Elastomer C8 | Elastomer E8 |
|---|---|---|
| Thickness (mm) | 6 | 6 |
| Maximum deceleration (m/s2) | 445 | 350 |
| Maximum penetration (mm) | 3 | 3 |
| Energy returned (%) | 24 | 15 |

The deceleration and returned energy values, which represent the impact absorption properties, show that elastomer E8 of the invention has markedly better impact absorption properties than those of comparative elastomer C8.

### EXAMPLE 5

This example involves moldings of wear layers for combined soles made with elastomer E10 of the invention, prepared with resin A1, and with comparative elastomers C10, C 11, and C12 prepared with resins B 1, B3, and B4, respectively. The formulations of the hydroxylated component for E10, C10, C11, and C12 are comparable to those described previously in example 2 (resin + MEG + triethylene diamine + water). The reaction parameters and results are given in Table XII below:

**TABLE XII**

| | Comparative elastomer C10 | Comparative elastomer C11 | Comparative elastomer C12 | Elastomer E10 |
|---|---|---|---|---|
| Prepolymer | P1 | P1 | P1 | P1 |
| Polyester polyol resin | B1 | B3 | B4 | A1 |

| Reaction Parameters | | | | |
|---|---|---|---|---|
| NCO:OH ratio | 66:100 | 68:100 | 68:100 | 65:100 |
| Creme time (s) | 7-9 | 8-10 | 10-12 | 8-9 |
| Tack free time (s) | 31-33 | 29-31 | 28-30 | 21-23 |
| Setting time (s) | 56-58 | 53-55 | 48-50 | 42-45 |
| Free density | 0.7 | 0.75 | 0.77 | 0.7 |
| Lifting time in min | 2.75 | 2.75 | 2.5 | 2.5 |
| Molding temperature in °C | 50 | 50 | 50 | 50 |

| Physical and Mechanical Properties * | | | | |
|---|---|---|---|---|
| Molding density | 1 | 1 | 1 | 1 |
| Shore A hardness | 61-63 | 63-65 | 60-61 | 60-62 |
| Elongation in % | 530 | 530 | 500 | 540 |
| Breaking load | | | | |
| before hydrolysis MPa | 18.7 | 21.3 | 16.3 | 15.4 |
| Hydrolysis at 7 days, % retention | 43 | 53 | 72 | 79 |
| Hydrolysis at 14 days, % retention | 8 | 23 | 51 | 64 |
| Hydrolysis at 21 days, % retention | 0 | 2 | 14 | 35 |
| Tearing N/mm | 58 | 55 | 45 | 56 |
| Ross Flex at 20°C, kilocycles for 500% propagation of starter cut | 60 | >200 | 130 | >200 |

| | | | | |
|---|---|---|---|---|
| * performed on sheets 6 mm thick | | | | |

These results show that simply adding sebacic acid (elastomer C12) is not enough to achieve the hydrolysis resistance obtained with the polyesters of this invention.

### EXAMPLE 6

This example involves moldings of wear layers for combined soles made with elastomers E11-E13 of the invention prepared using resins A2, A3, and A4. The formulations of the hydroxylated component for E10, C10, C 11, and C12 are similar to those described previously in example 2 (resin + MEG + triethylene diamine + water). The reaction parameters and results are given in Table XIII below.

**TABLE XIII**

| | Elastomer E11 | Elastomer E12 | Elastomer E13 |
|---|---|---|---|
| Prepolymer | P1 | P1 | P1 |
| Polyester polyol resin | A2 | A3 | A4 |

| Reaction Parameters | | | |
|---|---|---|---|
| NCO:OH ratio | 70:100 | 70:100 | 70:100 |
| Creme time (s) | 8-10 | 7-9 | 8-10 |
| Tack free time (s) | 28-30 | 20-22 | 24-26 |
| Setting time (s) | 48-50 | 42-44 | 48-50 |
| Free density | 0.77 | 0.76 | 0.72 |
| Lifting time in min | 2.5 | 2.25 | 2.25 |
| Molding temperature in °C | 50 | 50 | 50 |

| Physical and Mechanical Properties * | | | |
|---|---|---|---|
| Molding density | 1 | 1 | 1 |
| Shore A hardness | 61-62 | 59-61 | 60-62 |
| Elongation in % | 490 | 515 | 490 |
| Breaking load | | | |
| before hydrolysis MPa | 14.2 | 15.2 | 13.8 |
| Hydrolysis at 7 days, % retention | 70 | 68 | 69 |
| Hydrolysis at 14 days, % retention | 60 | 56 | 63 |
| Hydrolysis at 21 days, % retention | 33 | 40 | 42 |
| Tearing N/mm | 54 | 55 | 58 |
| Ross Flex at 20°C, kilocycles for 500% propagation of starter cut | 60 | 70 | 75 |

| | | | |
|---|---|---|---|
| * performed on sheets 6 mm thick | | | |

Elastomers E11-E13 made from resins A2-A4 have very good resistance to hydrolysis. Compared to Tables VIII and XII, these results show that the combination of the acids in this invention provides a marked improvement in the resistance to hydrolysis compared to the previous technology.

The combined results of examples 1 through 5 demonstrate that the process of this invention makes it possible to achieve a substantial systematic improvement in the hydrolysis resistance of urethane elastomers.

## Claims

1. A process for improving the hydrolysis resistance of a urethane elastomer, with said elastomer being prepared by the reaction of a hydroxylated compound with a prepolymer in the presence of a catalyst, and optionally a foaming agent and a surfactant,
- said hydroxylated compound comprising at least one polyester polyol resin,
- said prepolymer being prepared by a reaction of at least a second polyester polyol resin and/or at least one polyether polyol resin and at least one polyisocyanate, with the polyisocyanate being in molar excess with respect to the second polyester polyol resin and/or the polyether polyol resin,
- both the first and second polyester polyol resin being prepared by a reaction of at least one polyacid with at least one polyol,
wherein at least the first polyester polyol resin is prepared by a reaction of at least one aliphatic dicarboxylic acid comprising 8 to 12 carbon atoms and an ortho-phthalic acid or its corresponding anhydride, with at least one polyol.

2. A process according to claim 1 wherein, in order to prepare at least the first resin, the molar ratio of the ortho-phthalic acid or anhydride to the aliphatic dicarboxylic acid is between 30:70 and 60:40.

3. A process according to claim 1 wherein the aliphatic dicarboxylic acid used to prepare at least the first polyester polyol resin is sebacic acid.

4. A process according to claim 1 wherein the polyol used to prepare at least the first polyester polyol resin is chosen from the group consisting of monoethylene glycol, diethylene glycol, butanediol, and their mixtures.

5. A process according to claim 4 wherein the polyol used to prepare at least the first polyester polyol resin is diethylene glycol.

6. A process according to claim 1 wherein said prepolymer is prepared by a reaction of at least a second polyester polyol resin and at least one polyisocyanate, and, for the preparation of said second polyester polyol resin, the polyacid used is chosen from among the group consisting of succinic acid, glutaric acid, adipic acid, and their mixtures, and the polyol used is chosen from among the group consisting of monoethylene glycol, diethylene glycol, butanediol, and their mixtures.

7. A polyester polyol comprising the reaction product of at least one aliphatic dicarboxylic acid having 8 to 12 carbon atoms and ortho-phthalic acid or its corresponding anhydride, with at least one polyol.

8. A polyester polyol according to claim 7 wherein the molar ratio of the ortho-phthalic acid or anhydride to the aliphatic dicarboxylic acid is between 30:70 and 60:40.

9. A polyester polyol according to claim 7 wherein the aliphatic dicarboxylic acid used is sebacic acid.

10. A polyester polyol according to claim 7 wherein the polyol used is chosen from among the group consisting of monoethylene glycol, diethylene glycol, or butanediol, and mixtures thereof.

11. A polyester polyol according to claim 10 wherein the polyol used is diethylene glycol.

12. A urethane elastomer having an improved resistance to hydrolysis obtained by the process as defined in claim 1.

13. The use of the urethane elastomer of claim 12 to make shoe soles.

## Patentansprüche

1. Verfahren zur Verbesserung der Hydrolysebeständigkeit eines Urethanelastomers, wobei das Elastomer durch die Umsetzung einer hydroxylierten Verbindung mit einem Prepolymer in Gegenwart eines Katalysators und gegebenenfalls eines Treibmittels und eines Tensids hergestellt wird,
- wobei die hydroxylierte Verbindung mindestens ein Polyesterpolyolharz umfasst,
- wobei das Prepolymer durch eine Umsetzung von mindestens einem zweiten Polyesterpolyolharz und/oder mindestens einem Polyetherpolyolharz und mindestens einem Polyisocyanat hergestellt wird, wobei das Polyisocyanat in molarem Überschuss in Bezug auf das zweite Polyesterpolyolharz und/oder das Polyetherpolyolharz vorliegt,
- wobei sowohl das erste als auch das zweite Polyesterpolyolharz durch eine Umsetzung von mindestens einer Polysäure mit mindestens einem Polyol hergestellt wird,
wobei mindestens das erste Polyesterpolyolharz durch eine Umsetzung von mindestens einer aliphatischen Dicarbonsäure mit 8 bis 12 Kohlenstoffatomen und einer ortho-Phthalsäure oder deren entsprechendem Anhydrid mit mindestens einem Polyol hergestellt wird.

2. Verfahren nach Anspruch 1, bei dem zur Herstellung mindestens des ersten Harzes das Molverhältnis der ortho-Phthalsäure oder des Anhydrids zu der aliphatischen Dicarbonsäure zwischen 30:70 und 60:40 liegt.

3. Verfahren nach Anspruch 1, bei dem es sich bei der zur Herstellung mindestens des ersten Polyesterpolyolharzes verwendeten aliphatischen Dicarbonsäure um Sebacinsäure handelt.

4. Verfahren nach Anspruch 1, bei dem das zur Herstellung mindestens des ersten Polyesterpolyolharzes verwendete Polyol aus der Gruppe bestehend aus Monoethylenglykol, Diethylenglykol, Butandiol und Mischungen davon ausgewählt wird.

5. Verfahren nach Anspruch 4, bei dem es sich bei dem zur Herstellung mindestens des ersten Polyesterpolyolharzes verwendeten Polyol um Diethylenglykol handelt.

6. Verfahren nach Anspruch 1, bei dem das Prepolymer durch eine Umsetzung von mindestens einem zweiten Polyesterpolyolharz und mindestens einem Polyisocyanat hergestellt wird und für die Herstellung des zweiten Polyesterpolyolharzes die verwendete Polysäure aus der Gruppe bestehend aus Bernsteinsäure, Glutarsäure, Adipinsäure und Mischungen davon ausgewählt wird und das verwendete Polyol aus der Gruppe bestehend aus Monoethylenglykol, Diethylenglykol, Butandiol und Mischungen davon ausgewählt wird.

7. Polyesterpolyol, umfassend das Umsetzungsprodukt von mindestens einer aliphatischen Dicarbonsäure mit 8 bis 12 Kohlenstoffatomen und ortho-Phthalsäure oder deren entsprechendem Anhydrid mit mindestens einem Polyol.

8. Polyesterpolyol nach Anspruch 7, bei dem das Molverhältnis der ortho-Phthalsäure oder des Anhydrids zu der aliphatischen Dicarbonsäure zwischen 30:70 und 60:40 liegt.

9. Polyesterpolyol nach Anspruch 7, bei dem es sich bei der aliphatischen Dicarbonsäure um Sebacinsäure handelt.

10. Polyesterpolyol nach Anspruch 7, bei dem das verwendete Polyol aus der Gruppe bestehend aus Monoethylenglykol, Diethylenglykol, Butandiol und Mischungen davon ausgewählt wird.

11. Polyesterpolyol nach Anspruch 10, bei dem es sich bei dem verwendeten Polyol um Diethylenglykol handelt.

12. Urethanelastomer mit verbesserter Hydrolysebeständigkeit, erhalten durch das Verfahren gemäß Anspruch 1.

13. Verwendung des Urethanelastomers nach Anspruch 12 zur Herstellung von Schuhsohlen.

## Revendications

1. Procédé pour améliorer la résistance à l'hydrolyse d'un élastomère d'uréthanne, ledit élastomère étant préparé par réaction d'un composé hydroxylé avec un prépolymère en présence d'un catalyseur, et optionnellement d'un agent d'expansion et d'un agent tensioactif,
- ledit composé hydroxylé consistant en au moins une résine polyester polyol,
- ledit prépolymère étant préparé par réaction d'au moins une deuxième résine polyester polyol et/ou d'au moins une résine polyéther polyol et d'au moins un polyisocyanate, le polyisocyanate étant en excès molaire par rapport à la deuxième résine polyester polyol et/ou la résine polyéther polyol,
- chacune de la première et de la deuxième résine polyester polyol étant préparée par réaction d'au moins un polyacide sur au moins un polyol,
**caractérisé par le fait qu'**au moins la première résine polyester polyol est préparée par réaction d'au moins un acide aliphatique dicarboxylique comprenant de 8 à 12 atomes de carbone et d'acide ortho-phtalique ou de l'anhydride correspondant, avec au moins un polyol.

2. Procédé selon la revendication 1, **caractérisé par le fait que**, pour la préparation d'au moins la première résine, le rapport molaire de l'acide ou de l'anhydride ortho-phtalique à l'acide aliphatique dicarboxylique est compris entre 30/70 et 60/40.

3. Procédé selon la revendication 1, **caractérisé par le fait que** l'acide aliphatique dicarboxylique utilisé pour la préparation d'au moins la première résine polyester polyol est l'acide sébacique.

4. Procédé selon la revendication 1, **caractérisé par le fait que** le polyol utilisé pour la préparation d'au moins la première résine polyester polyol est choisi dans le groupe formé par le monoéthylène glycol, le diéthylène glycol, le butane-diol et les mélanges de ceux-ci.

5. Procédé selon la revendication 4, **caractérisé par le fait que** le polyol utilisé pour la préparation d'au moins la première résine polyester polyol est le diéthylène glycol.

6. Procédé selon la revendication 1, **caractérisé par le fait que** ledit prépolymère est préparé par réaction d'au moins une deuxième résine polyester polyol et d'au moins un polyisocyanate, et que pour la préparation de ladite deuxième résine polyester polyol, le polyacide utilisé est choisi dans le groupe constitué par l'acide succinique, l'acide glutarique, l'acide adipique et leurs mélanges, et le polyol utilisé est choisi dans le groupe constitué par le monoéthylène glycol, le diéthylène glycol, le butane-diol et leurs mélanges.

7. Polyester polyol comprenant le produit de réaction d'au moins un acide dicarboxylique aliphatique ayant 8 à 12 atomes de carbone et d'acide ortho-phtalique ou de l'anhydride correspondant, avec au moins un polyol.

8. Polyester polyol selon la revendication 7, **caractérisé par le fait que** le rapport molaire de l'acide ou de l'anhydride ortho-phtalique à l'acide aliphatique dicarboxylique est compris entre 30/70 et 60/40.

9. Polyester polyol selon la revendication 7, **caractérisé par le fait que** l'acide aliphatique dicarboxylique utilisé est l'acide sébacique.

10. Polyester polyol selon la revendication 7, **caractérisé par le fait que** le polyol utilisé est choisi dans le groupe formé par le monoéthylène glycol, le diéthylène glycol ou le butane-diol et les mélanges de ceux-ci.

11. Polyester polyol selon la revendication 10, **caractérisé par le fait que** le polyol utilisé est le diéthylène glycol.

12. Élastomère d'uréthanne présentant une résistance améliorée à l'hydrolyse et obtenu par le procédé tel que défini à la revendication 1.

13. Utilisation de l'élastomère d'uréthanne selon la revendication 12 pour la réalisation de semelles de chaussures.
